# FASCICULE DE BREVET EUROPEEN

(11) **EP 4 422 411 B1**
(45) Date de publication et mention de la délivrance du brevet: **03.12.2025**
(21) Numéro de dépôt: 22803346.0
(22) Date de dépôt: 21.10.2022
(51) Int. Cl.: A23G 9/22, A23G 9/28, F25C 5/20

(54) **DISTRIBUTEUR DE GLAÇONS**
EISWÜRFELSPENDER
ICE CUBE DISPENSER

(30) Priorité: 31.10.2021 FR 2111219
(43) Date de publication de la demande: 04.09.2024
(73) Titulaire: Rossi, Michèle, 20000 Ajaccio (FR)
(72) Inventeur: Rossi, Michèle, 20000 Ajaccio (FR)
(74) Mandataire: IP Trust
(86) Numéro de dépôt international: PCT/FR2022/052003
(87) Numéro de publication internationale: WO 2023/067291

(56) Documents cités:
- EP-A1- 3 581 863
- FR-A1- 3 040 772
- JP-B2- 2 843 150
- US-A- 3 437 244
- US-A- 5 050 777
- US-A- 5 054 654
- US-A- 5 104 007
- US-A- 6 010 037
- US-A1- 2006 027 599
- US-B1- 8 511 101

## Description

### DOMAINE TECHNIQUE DE L'INVENTION

La présente invention concerne l'amélioration technique et fonctionnelle d'un distributeur de glaçons existant, portant le N° de brevet FR1558260, déposé le 07/09/2015, pour délivrer des glaçons à la demande d'un consommateur.

FR3040772A1 (priorité FR1558260A) divulgue un distributeur de glaçons pour délivrer des glaçons à la demande d'un consommateur.

La présente invention améliore très sensiblement le fonctionnement du distributeur, tant sur le brassage et la délivrance des glaçons, que sur la robustesse et la fiabilité mécanique et électronique. En particulier, elle permet de palier l'inconvénient rencontré qui est la présence de glaçons non brassés, collés entre eux, dont les amas de glace générés réduisent le volume de glaçons distribués et engendrent des masses et efforts mécaniques anormaux pour l'entraînement mécanique des godets et de l'axe agitateur.

### OBJET DE L'INVENTION

A cet effet, et selon un premier aspect, l'invention propose un dispositif de distribution de glaçons (également appelé distributeur de glaçon) comprenant une cuve (1) pour contenir des glaçons en vrac à distribuer, une roue (5) de prélèvement, montée rotative autour d'un axe agitateur (3) s'étendant à travers la cuve (1), ledit axe agitateur étant centré en ses extrémités dans la cuve (1) avec deux paliers à roulement et entrainé par un moto-réducteur (7) fixé sur la paroi de la cuve (1), et une ouverture de sortie (20) ménagée en partie haute de la paroi de la cuve (1), la roue (5) comprenant deux godets (2) doseurs dont la forme est choisie en correspondance avec un volume calibré de glaçons à distribuer, le dispositif de distribution comprenant en outre un organe de commande (7) propre à faire tourner la roue (5) dans le sens horaire sous la commande d'un consommateur, pour prélever une quantité calibrée de glaçons dans la cuve jusqu'à une position haute dans laquelle le côté ouvert du godet (2) est disposé en regard de l'ouverture de sortie (20) pour la livraison d'une dose de glaçons, caractérisé en ce que la position mécanique « 0 » horizontale des deux godets (2) est repérée par un capteur de position (10) fixé sur l'axe de rotation moto-réducteur (7) et en ce que l'ouverture et la fermeture de l'ouverture de sortie (20) sont gérées avec une trappe (11), elle-même pilotée par le cycle de brassage (sens anti-horaire), de distribution (sens horaire) et la position respective des deux godets (2) avec le capteur de position (10).

Avantageusement, la cuve a une forme géométrique spatiale optimum, pour permettre un brassage de tous les glaçons contenus, avec l'axe agitateur muni de pales, pour éviter des collages de glaçons entre eux. Ainsi, et avantageusement, la forme géométrique de la cuve est modifiée afin de supprimer les zones de stagnation de glaçons qui ne sont pas brassés avec l'axe agitateur rotatif, muni de pales croisées à 90°. Notamment, en transversal, les pans coupés sur les côtés sont supprimés et remplacés par une continuité de forme avec une pente rejoignant la partie circulaire du fond de la cuve. Avantageusement, le fond de la cuve, en longitudinal, est modifié pour suivre exactement la conicité des pales en rotation, de façon à brasser totalement les glaçons en fond de cuve.

Avantageusement, l'axe agitateur possède des pales, de préférence cinq pales, orientées à 90° l'une de l'autre, de longueurs progressives générant un tronc de cône en rotation, pour épouser la forme intérieure de la cuve et brasser ainsi tous les glaçons. Cet arrangement permet ainsi d'éviter des amas non brassés, qui provoquent des blocs de glace très gênants pour l'effort de rotation et rendant la distribution avec les godets très difficile.

Avantageusement, la forme avant de chacun des deux godets est optimisée pour prendre une dose calibrée de glaçons dans le sens horaire, et que la forme arrière est optimisée/profilée pour brasser efficacement sans effort mécanique les glaçons dans le sens anti-horaire. Par face avant, on entend la face par laquelle les glaçons sont prélevés et par face arrière la face opposée à la face avant.

Avantageusement, le dispositif de distribution est associé à une machine de production de glaçons, qu'elle soit intégrée ou non dans le dispositif de distribution. Quel que soit l'arrangement, il est avantageusement prévu que la cuve soit isolée thermiquement de la machine de production de glaçons, afin de conserver une température de glaçons dans la cuve inférieure à 0°C.

Avantageusement, l'axe agitateur est centré en ses extrémités dans la cuve avec deux paliers à roulement, et entrainé par un moto-réducteur fixé sur la paroi de la cuve afin d'assurer un fonctionnement mécanique fiable du brassage.

Avantageusement, l'arrêt de la production de glaçons est réalisé par un capteur de « cuve pleine », placé pour détecter la hauteur de glaçons présents dans la cuve et ne pas être endommagé lors du brassage des glaçons.

Avantageusement, la position mécanique « 0 » horizontale des deux godets est repérée par un capteur de position fixé sur l'axe de rotation du moto-réducteur.

Avantageusement, la connaissance du positionnement des godets permet le pilotage et la commande de la distribution de glaçons, avec une rotation sens horaire de 90°.

Avantageusement, l'ouverture et la fermeture de l'ouverture de sortie sont gérées avec une trappe, elle-même pilotée par le cycle de brassage (sens anti-horaire), de distribution (sens horaire) et la position respective des deux godets avec le capteur de position. Selon un mode de réalisation particulier, la trappe est actionnée par un vérin fixé sur la paroi de la cuve (de préférence la paroi frontale).

Avantageusement, la distribution de glaçons au consommateur s'effectue à travers un tube de distribution, avantageusement rallongé par rapport, et sécurisé avec des croisillons pour éviter la pénétration, à l'intérieur, d'un élément extérieur (main, outil, etc.). Selon un mode de réalisation particulièrement avantageux, il est peut être prévu également que les croisillons soient arrangés pour séparer les glaçons lors de leur descente dans le tube, avant leur mise en sachet.

Avantageusement, le tube de distribution est muni de deux crochets pour accrocher un sachet lors de la récupération des glaçons.

Avantageusement, le dispositif de distribution comporte un mécanisme de distribution de sachets dont la distribution est pilotée par une trappe transparente, afin d'éviter des manipulations et prises de sachets intempestives, lors du cycle de brassage ou distribution des glaçons.

Avantageusement, le dispositif de distribution comporte un extracteur d'air permettant d'évacuer la chaleur contenue à l'intérieur du distributeur vers l'extérieur du distributeur, et ainsi conserver les glaçons à basse température dans la cuve.

Avantageusement, le dispositif de distribution est équipé d'une enveloppe extérieure assurant le réfléchissement du rayonnement extérieur sur le distributeur, de sorte à minimiser les échanges thermiques entre l'extérieur et l'intérieur du distributeur, pour conserver des glaçons à basse température dans la cuve inférieure à 0°C. Avantageusement, l'enveloppe extérieure est de couleur blanc brillant.

Avantageusement, l'accès intérieur au distributeur est réalisé avec une porte, dont son ouverture et sa fermeture sont facilitées par un système d'accostage muni d'une cale pentue en téflon^{™}, et d'une poignée de fermeture rotative pour bénéficier d'une fermeture progressive facilitée tout en tournant la poignée de fermeture rotative.

### °. BREVE DESCRIPTION DES FIGURES

D'autres caractéristiques et avantages de l'invention ressortiront de la description détaillée de l'invention qui va suivre en référence aux figures annexées et dans lesquelles :
- La figure 1 représente une vue en coupe longitudinale partielle du dispositif de distributions de glaçons avant amélioration ;
- La figure 2 représente une vue en coupe transversale au niveau de la pale B du dispositif de distribution illustré sur la figure 1 ;
- La figure 3 représente une vue en coupe longitudinale partielle du dispositif de distributions de glaçons selon l'invention montrant les évolutions apportées par rapport au dispositif de distribution de la figure 1 ;
- La figure 4 représente une vue en coupe transversale au niveau de la pale B du dispositif de distribution illustré sur la figure 3 montrant les évolutions apportées par rapport au dispositif de distribution de la figure 2 ;
- La figure 5 représente des vues de face, de côté et de dessus de la cuve respectivement du dispositif de distribution selon l'invention ((a), (b), (c)) et du dispositif de distribution de l'art antérieur ((a₀), (b₀), (c₀)) ;
- La figure 6 représente une vue de dessus de la cuve montrant l'agitateur du dispositif de distribution selon l'invention ;

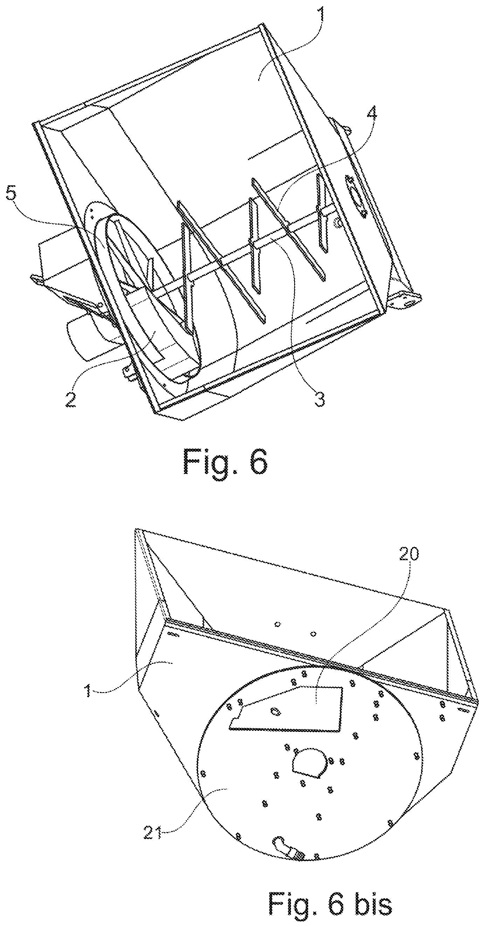

- La figure 6bis représente une vue frontale de la cuve avec son ouverture de distribution de glaçons ;

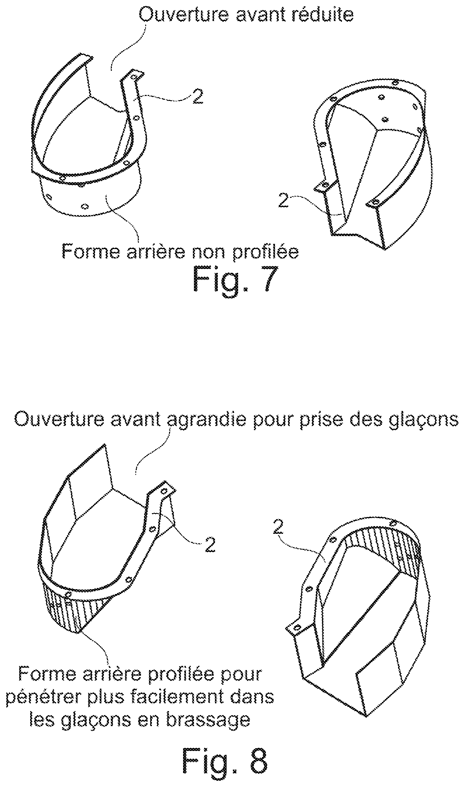

- Les figures 7, 8 représentent la forme des godets avant et après les améliorations ;

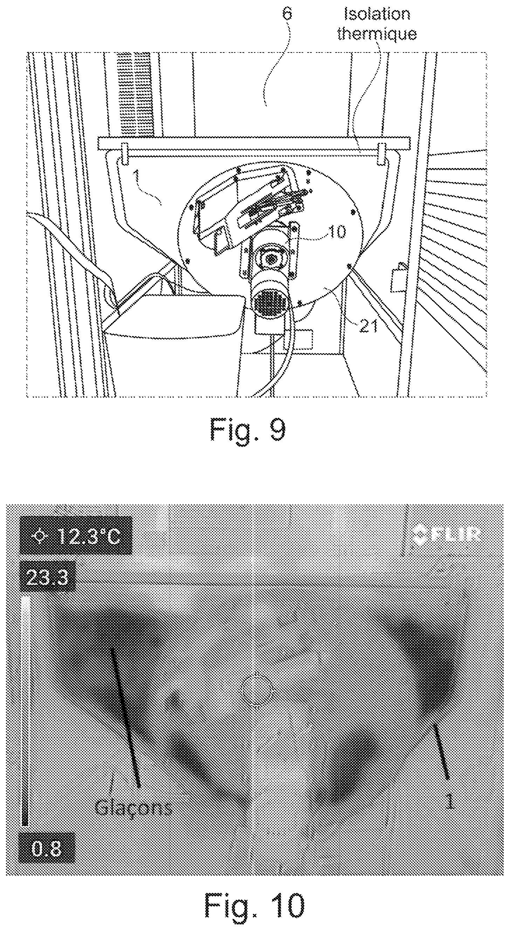

- La figure 9 représente une vue de face de la cuve modifiée pourvue du moto-réducteur ;
- La figures 10 représente la cartographie de température homogène dans les parties de la cuve modifiée ;

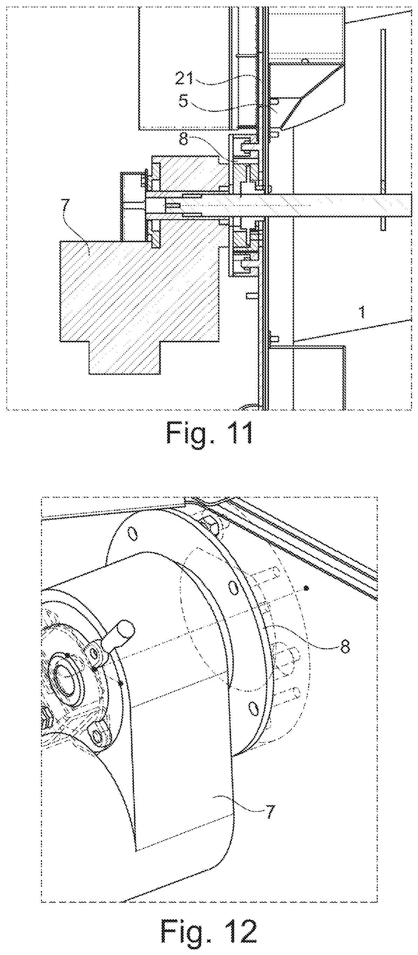

- Les figures 11, 12, 13 représentent une vue en coupe de la paroi avant de la cuve améliorée, montrant la fixation améliorée de l'axe et du moto-réducteur ;

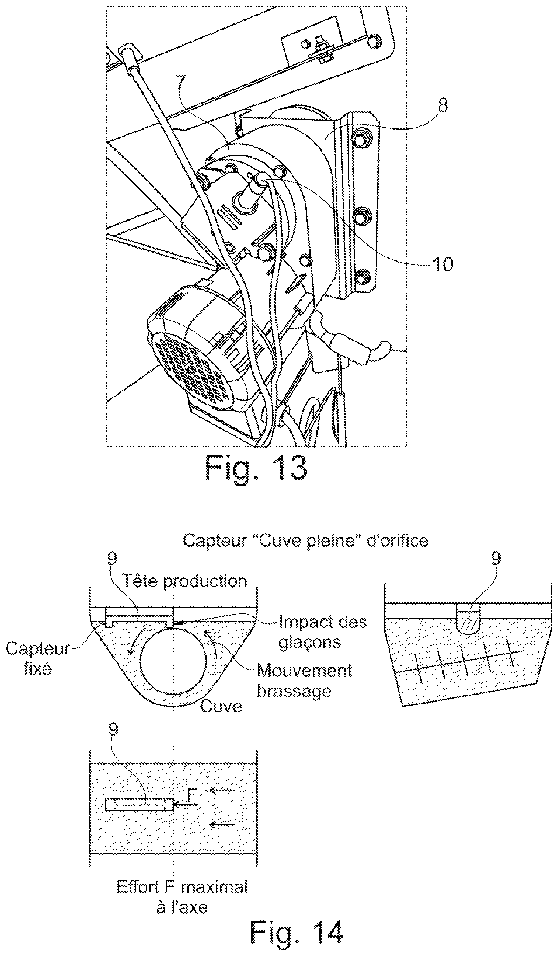

- Les figures 14, 15, 16 représentent la position du capteur « cuve pleine » ;

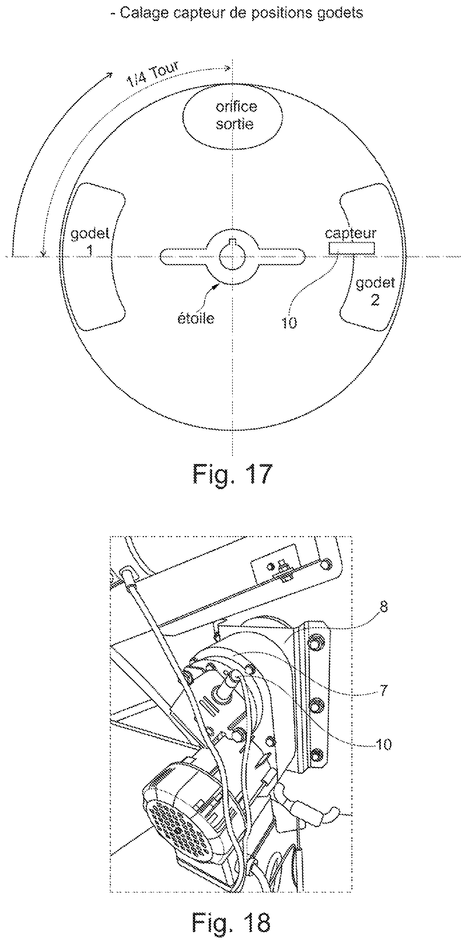

- Les figures 17, 18 représentent le nouveau fonctionnement du capteur de position « 0 » des godets ;

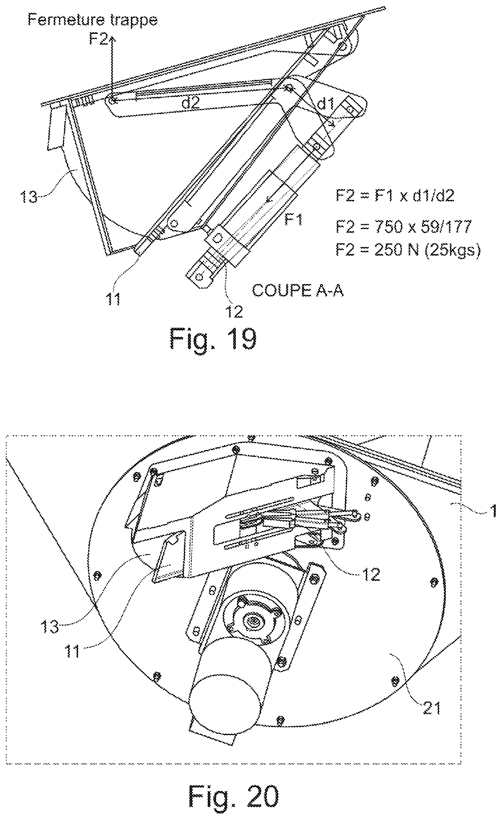

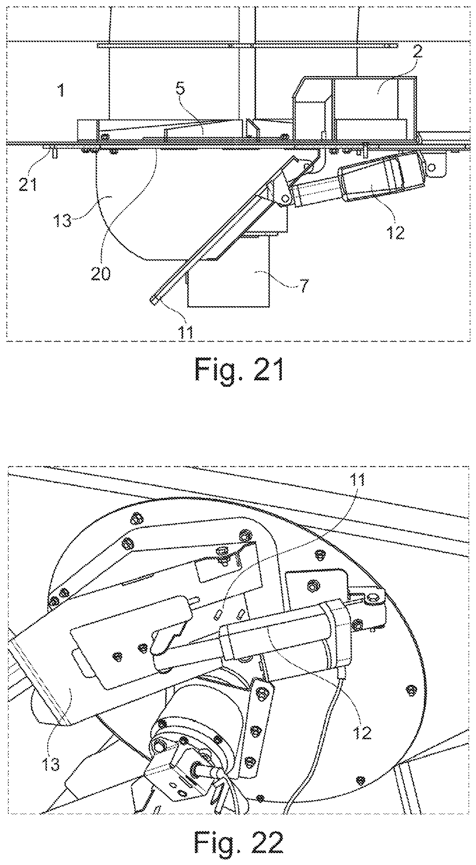

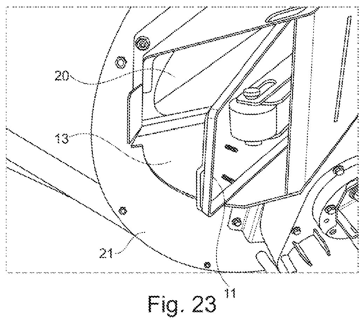

- Les figures 19, 20, 21, 22, 23 représentent le fonctionnement de la trappe glaçons, avec la modification du toboggan de sortie et distribution ;

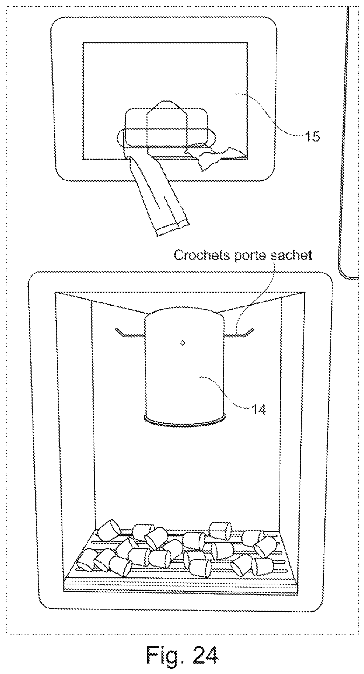

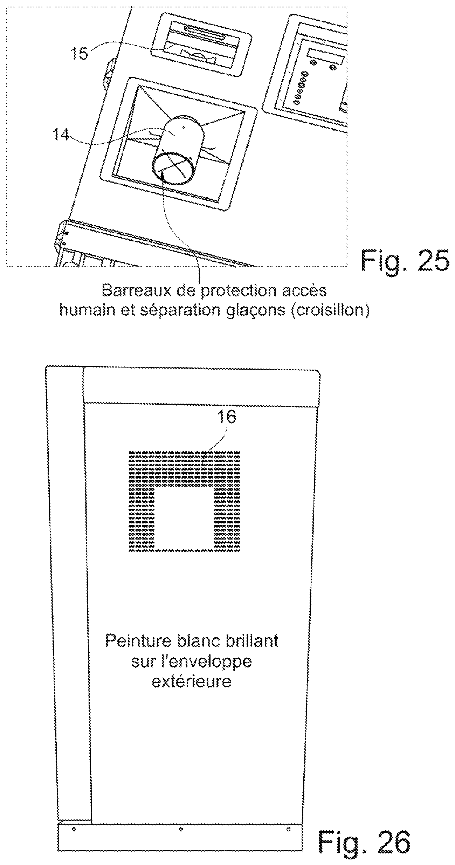

- Les figures 24, 25 représentent une vue de détail de la trappe de verrouillage sachets et du tube de guidage glaçons ;
- La figure 26 représente une vue de l'enveloppe extérieure du dispositif de distribution de glaçons ;

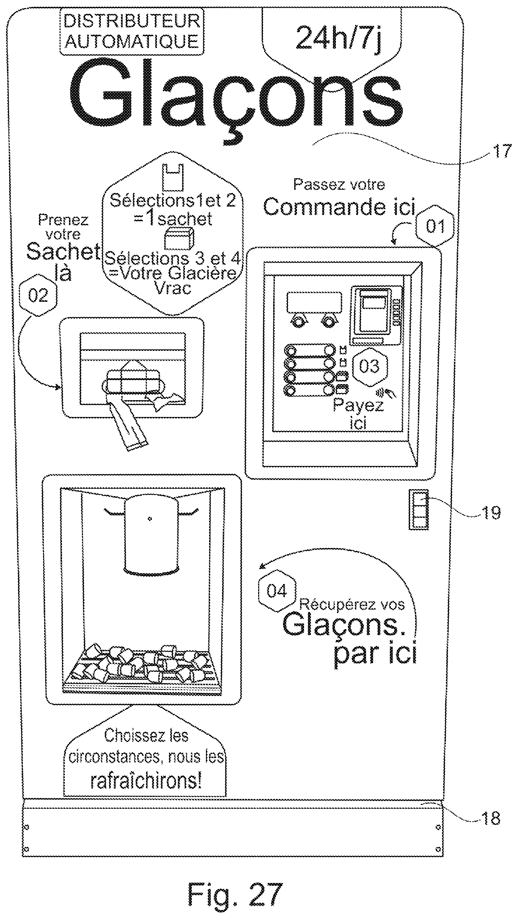

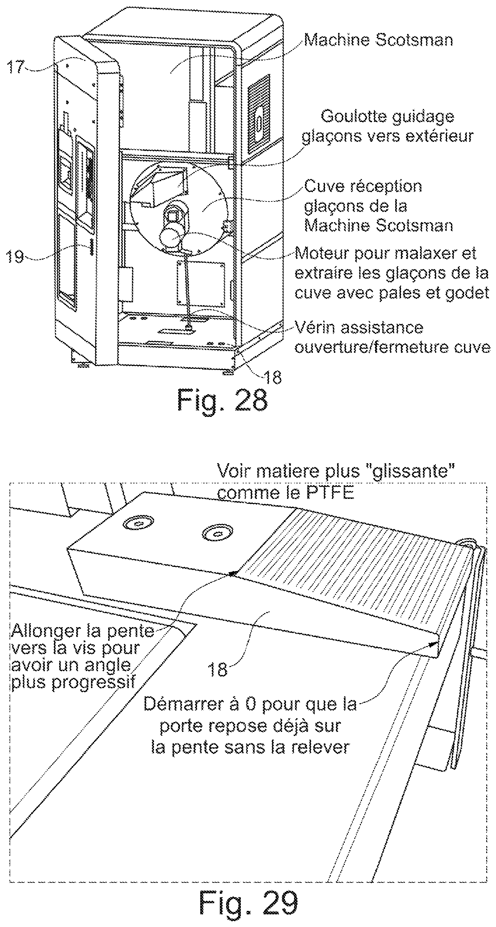

- Les figures 27, 28, 29 représentent une amélioration de la manipulation de la porte et sa fermeture.

Pour plus de clarté, les éléments identiques ou similaires des différents modes de réalisation sont repérés par des signes de référence identiques sur l'ensemble des figures.

### DESCRIPTION DETAILLEE DE L'INVENTION

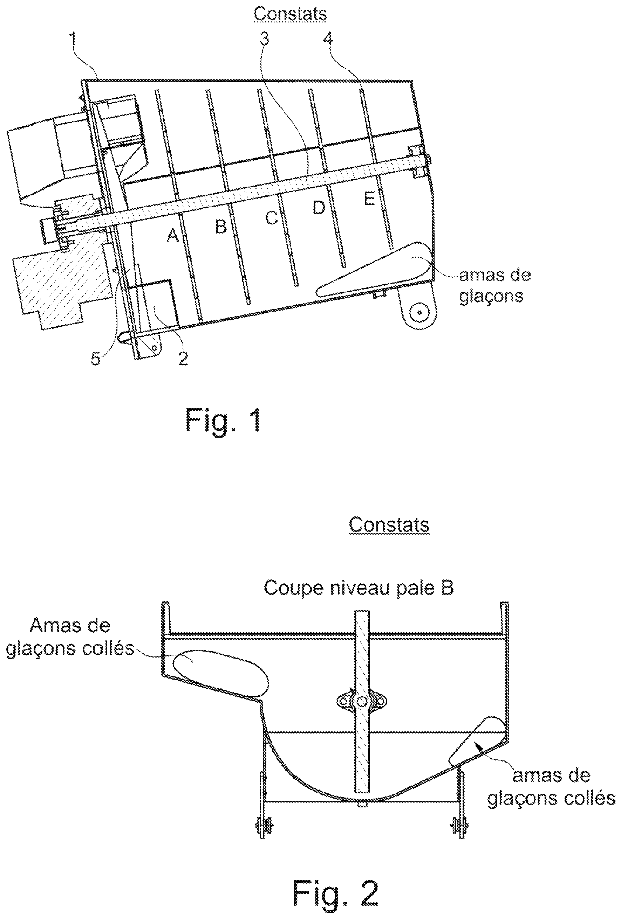

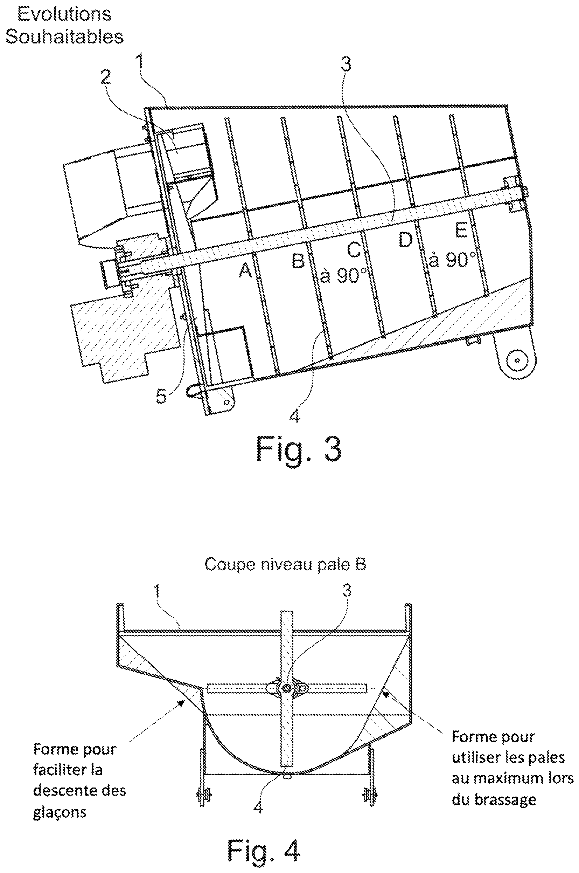

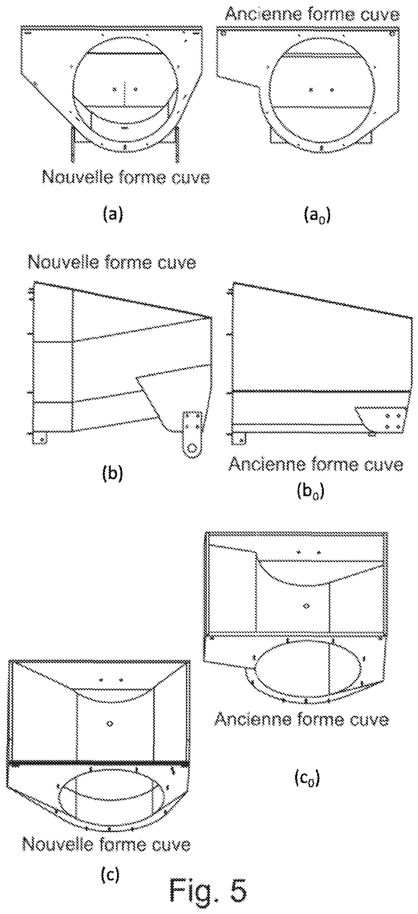

Les figures 1, 2, 3, 4, 5, 6, 6bis sont décrites conjointement, montrant explicitement les améliorations de la forme de la cuve (1), de l'axe agitateur (3), des pales (4). Les figures 1 et 2 illustrent des amas de glaçons collés stagnant gênant la descente des glaçons vers le bas de la cuve (1). Il est illustré sur la figure 3 par un trait plus fin une inclinaison du bas de la cuve pour se rapprocher des pales et brasser tous les glaçons au fond. Il est illustré sur la figure 4 une forme (côté gauche de la cuve illustrée) pour faciliter la descente des glaçons en bas et éviter des amas de glaçons collés (trait plus fin côté gauche de la cuve) et une forme (côté droit de la cuve illustrée) pour utiliser les pales au maximum lors du brassage, et faciliter la descente des glaçons en bas et éviter des amas de glaçons collés.

L'axe agitateur (3) reçoit notamment la roue (5) porte-godets en avant de la cuve, pour effectuer la distribution des glaçons lorsque les godets (2) se présentent devant l'ouverture (20) de la paroi frontale (21) de la cuve (1). Il y a deux godets placés à 180° l'un de l'autre, qui passent alternativement chacun devant l'ouverture (20) de distribution des glaçons.

Les godets (2) sont améliorés sur leur forme, tant sur l'avant avec une ouverture agrandie afin de faciliter la prise d'une dose calibrée et le volume de glaçons lors du sens horaire du service de distribution, que sur l'arrière avec une forme profilée pour pénétrer plus facilement dans les glaçons lors de la rotation de brassage en sens anti-horaire, pour séparer et brasser sans effort mécanique ou tout du moins en réduisant les efforts de rotation mécanique.

Les figures 7, 8 sont décrites conjointement, montrant explicitement la forme des godets avant et après les améliorations.

Le cycle de brassage est corrigé de façon à réaliser une rotation alternée, avec une fréquence variable selon les températures extérieures. De ce fait, on obtient des glaçons en mouvement le plus fréquemment possible, pour qu'ils ne se collent pas entre eux et ne produisent pas de amas de blocs de glace. De plus, on obtient une température plus homogène avec des glaçons bien répartis et non collés.

Le principe du distributeur nécessite une isolation thermique importante de la cuve (1) vis-à-vis de son environnement extérieur proche, afin de conserver une température des glaçons relativement homogène, en dessous de 0°C. De ce fait, l'isolation thermique entre le haut de la cuve (1) et le bas de la machine de production de glaçons (6) est rajoutée, afin d'éviter des échanges et déperditions de température favorisant une fonte des glaçons.

Les figures 9, 10, sont décrites conjointement, montrant explicitement la cartographie de température homogène dans les parties de la cuve (1) ainsi modifiée (caméra thermique Fluke).

Au niveau mécanique, la fixation et le centrage du moto-réducteur (7) sur l'axe de brassage (3) sont nettement renforcés pour réduire les efforts mécaniques sur les fixations du moto-réducteur (7). Le fonctionnement mécanique fiable du brassage nécessite que l'axe agitateur (3) soit centré en ses extrémités dans la cuve avec deux paliers à roulement. Dans l'exemple illustré, l'axe de brassage (3) avec ses pales est recentré à l'avant et à l'arrière avec deux paliers rotatifs sur les parois verticales de la cuve (1). Le moto-réducteur (7) est fixé sur une platine intermédiaire (8), permettant de faciliter la maintenance de la cuve (1) en démontant le moto-réducteur (7) indépendamment de la cuve (1), ainsi qu'une reprise d'efforts supplémentaires pour la fixation du moto-réducteur (7). Dans le mode de réalisation illustré, le moto-réducteur (7) est fixé sur la paroi frontale (21) de la cuve par l'intermédiaire de la platine (8). Il est bien entendu évident qu'il s'agit d'un exemple de réalisation et que le moteur-réducteur (7) peut présenter un positionnement différent sans sortir du cadre de l'invention. Il peut ainsi présenter par exemple un arrangement déporté par rapport à l'axe agitateur.

Les figures 11, 12, 13 sont décrites conjointement, montrant explicitement la fixation améliorée de l'axe (3) et du moto-réducteur (7).

Lors du remplissage des glaçons dans la cuve (1), l'indication « cuve pleine » fournie par un capteur de détection de niveau de glaçons (9) est parfois erronée, due à l'endommagement du capteur lors du brassage. Le capteur (9) modifié, tant par sa forme plus petite, que sa position parallèle au mouvement des glaçons lors du brassage. De ce fait, sa fiabilité est nettement améliorée. Avantageusement, l'arrêt de la production de glaçons est réalisé par le capteur (9) de « cuve pleine », judicieusement placé et fixé pour détecter la hauteur de glaçons présents dans la cuve (1) et ne pas être endommagé lors du brassage des glaçons.

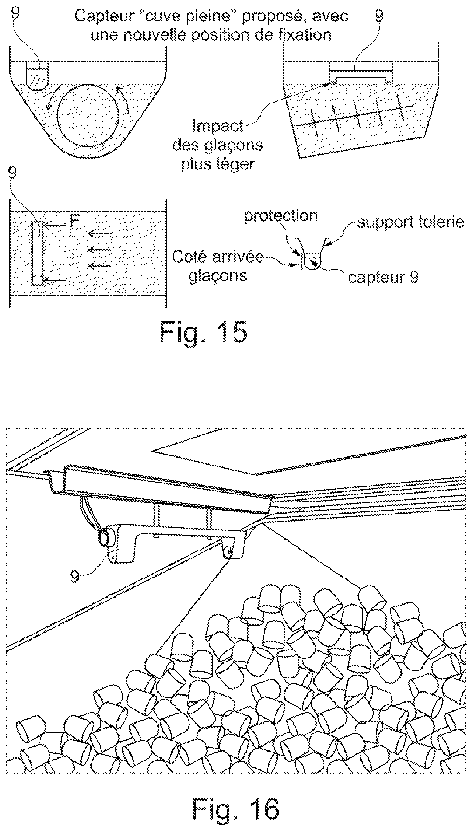

Les figures 14, 15, 16 sont décrites conjointement, montrant explicitement la nouvelle position du capteur « cuve pleine » (9). En effet, comme illustré sur la figure 14, l'impact des glaçons lors du brassage induit une force directe importante sur la partie plastique du capteur, et donc la casse de celle-ci. La force est très importante car le brassage fait remonter tous les glaçons en frontal sur le capteur. La nouvelle position du capteur, illustrée sur la figure 15, correspond à une orientation à 90° de la position du capteur illustré sur la figure 14, pour permettre d'éviter un choix direct sur les extrémités et être en fin de brassage « descendant » pour que les glaçons aient un mouvement descendant plutôt que montant, pour réduire la force d'impact. L'impact des glaçons est plus léger car en fin de brassage descendant. Les glaçons arrivent avec une force plus faible car entrainés vers la descente en rotation. Il faut en prévision, modifier le support tôlerie capteur pour rajouter deux protections aux extrémités côté arrivée glaçons.

Le fonctionnement de la distribution des glaçons est revu profondément, pour améliorer et simplifier le réglage de positionnement et de synchronisation des godets (2) face à l'ouverture (20) de sortie des glaçons.

Ainsi, deux capteurs de positionnement des godets (2) sont supprimés, car complexes à régler et fragiles.

Le capteur (10) de détection de « 0 » de position des godets (2) à l'horizontale est refixé sur une pièce sur l'axe moto-réducteur (7), clavetée pour ne plus se décaler en rotation. Le capteur (10) est réglé avec la pièce à l'horizontale et les godets (2) également à l'horizontale. Avantageusement, la connaissance du positionnement des godets (2) permet le pilotage et la commande de la distribution de glaçons, avec une rotation sens horaire de 90°.

Les figures 17, 18 sont décrites conjointement, montrant explicitement le nouveau fonctionnement du capteur (10) de position « 0 » des godets (2). Ainsi, les deux godets sont à l'horizontale pour la position 0, et le capteur doit détecter cela avec l'étoile à l'horizontale (figure 17). Il y a donc ¼ de tour entre le godet 1 et l'orifice de sortie glaçons.

Egalement, le fonctionnement de la distribution des glaçons est revu totalement pour supprimer les pertes de glaçons lors du brassage et du passage des godets (2) devant l'ouverture (20) de sortie des glaçons.

A cet effet, une trappe de fermeture et ouverture (11) de cette ouverture (20) est rajoutée. La trappe (11) est pilotée par le cycle de brassage (sens anti-horaire), de distribution (sens horaire) et la position respective des deux godets (2) avec le capteur de position (10). Elle est commandée par un vérin (12), judicieusement placé au niveau cinématique et encombrement, piloté selon le cycle de distribution/brassage. La trappe (11) ouvre l'ouverture (20) lors de la phase de distribution des glaçons, pilotée par le logiciel de commande moto-réducteur et vérin, avec les indications du capteur de position (10) des godets (2). Elle ferme l'ouverture (20) une fois la distribution effectuée et la phase de brassage enclenchée.

Le vérin (12) est fixé sur la paroi frontale (21) de la cuve (1), et pousse ou tire la trappe (11).

Par la même occasion, le « toboggan » (13) de sortie, guidage et distribution des glaçons est modifié au niveau formes, pour mieux guider la sortie des glaçons, avec une pente accentuée pour faciliter le glissement des glaçons et accueillir la cinématique de la trappe ajoutée (11).

Les figures 19, 20, 21, 22, 23 sont décrites conjointement, montrant explicitement le fonctionnement de la trappe glaçons (11), avec la modification du toboggan (13) de sortie et distribution.

La distribution des glaçons se poursuit en aval du toboggan (13) pour glisser dans le tube de distribution (14) et être ensachés dans le sachet positionné.

Le tube de distribution (14) est modifié, pour l'allonger et respecter des distances de sécurité si introduction de la main du consommateur, et pour rajouter un croisillon interne qui sépare les glaçons lors de leur descente dans le tube, et empêche de surcroît une insertion intempestive d'un objet extérieur (main, outil, etc.).

De même, des crochets de fixation sur les côtés extérieurs du tube (14) sont rajoutés, pour accrocher le sachet de récupération des glaçons, au lieu de le tenir à la main.

Une trappe transparente (15) est ajoutée pour limiter les prises de sachets intempestifs et protéger le consommateur sur la sécurité mécanique, en empêchant la main du consommateur d'aller dans le mécanisme de distribution sachets lors du brassage.

Cette trappe (15) est verrouillée s'il n'y a pas de demande de glaçons, et déverrouillée s'il y a une demande de distribution de glaçons en cours.

Les figures 24, 25 sont décrites conjointement, montrant explicitement le fonctionnement de la trappe de verrouillage sachets (15) et les modifications du tube de guidage glaçons (14).

Sur les aspects thermiques du distributeur, des améliorations sont réalisées concernant l'évacuation thermique de la chaleur de la machine de production (6), avec un puissant extracteur (16) d'air chaud intérieur vers l'extérieur, judicieusement positionné, et d'autre part avec une couleur blanc brillant de l'enveloppe extérieure du distributeur, reflétant à l'extérieur la chaleur des rayons du soleil, au lieu de les absorber dans la matière.

La figure 26 est décrite conjointement, montrant ces aspects thermiques pris en compte.

La fermeture de la porte (17) du distributeur est revue afin de faciliter sa manipulation d'ouverture/fermeture. Une cale pentue en téflon^{™} (18) est ajoutée pour faciliter l'accostage du bas de la porte sur le châssis du distributeur. De même, une poignée rotative (19) de fermeture de la porte est ajoutée pour faciliter la fermeture par un mouvement de rotation progressif, et la verrouiller en final.

Les figures 27, 28, 29 sont décrites conjointement, montrant explicitement l'amélioration de la manipulation de la porte et sa fermeture.

## Revendications

1. Dispositif de distribution de glaçons du type, comprenant une cuve (1) pour contenir des glaçons en vrac à distribuer, une roue (5) de prélèvement, montée rotative autour d'un axe agitateur (3) s'étendant à travers la cuve (1), ledit axe agitateur étant centré en ses extrémités dans la cuve (1) avec deux paliers à roulement et entrainé par un moto-réducteur (7) fixé sur la paroi de la cuve (1), et une ouverture de sortie (20) ménagée en partie haute de la paroi de la cuve (1), la roue (5) comprenant deux godets (2) doseurs dont la forme est choisie en correspondance avec un volume calibré de glaçons à distribuer, le dispositif de distribution comprenant en outre un organe de commande (7) propre à faire tourner la roue (5) dans le sens horaire sous la commande d'un consommateur, pour prélever une quantité calibrée de glaçons dans la cuve jusqu'à une position haute dans laquelle le côté ouvert du godet (2) est disposé en regard de l'ouverture de sortie (20) pour la livraison d'une dose de glaçons, **caractérisé en ce que** la position mécanique « 0 » horizontale des deux godets (2) est repérée par un capteur de position (10) fixé sur l'axe de rotation moto-réducteur (7) et **en ce que** l'ouverture et la fermeture de l'ouverture de sortie (20) sont gérées avec une trappe (11), elle-même pilotée par le cycle de brassage (sens anti-horaire), de distribution (sens horaire) et la position respective des deux godets (2) avec le capteur de position (10).

2. Dispositif de distribution de glaçons selon la revendication 1, **caractérisé en ce que** la cuve (1) a une forme géométrique spatiale optimum, pour permettre un brassage de tous les glaçons contenus, avec l'axe agitateur (3) muni de pales (4), pour éviter des collages de glaçons entre eux.

3. Dispositif de distribution de glaçons selon la revendication 1 ou la revendication 2, **caractérisé en ce que** l'axe agitateur (3) possède cinq pales (4) orientées à 90° l'une de l'autre, de longueurs progressives générant un tronc de cône en rotation, pour épouser la forme intérieure de la cuve (1) et brasser ainsi tous les glaçons.

4. Dispositif de distribution de glaçons selon l'une quelconque des revendications précédentes, **caractérisé en ce que** la forme avant de chacun des deux godets (2) est optimisée pour prendre une dose calibrée de glaçons dans le sens horaire, et que la forme arrière est profilée pour brasser efficacement sans effort mécanique les glaçons dans le sens anti-horaire.

5. Dispositif de distribution de glaçons selon l'une quelconque des revendications précédentes, **caractérisé en ce que** la cuve (1) est isolée thermiquement d'une machine de production de glaçons (6), afin de conserver une température de glaçons dans la cuve inférieure à 0°C.

6. Dispositif de distribution de glaçons selon l'une quelconque des revendications précédentes, **caractérisé en ce que** l'arrêt de la production de glaçons est réalisé par un capteur (9) de « cuve pleine », placé pour détecter la hauteur de glaçons présents dans la cuve (1) et ne pas être endommagé lors du brassage des glaçons.

7. Dispositif de distribution de glaçons selon l'une quelconque des revendications précédentes, **caractérisé en ce que** la connaissance du positionnement des godets (2) permet le pilotage et la commande de la distribution de glaçons, avec une rotation sens horaire de 90°.

8. Dispositif de distribution de glaçons selon l'une quelconque des revendications précédentes, **caractérisé en ce que** la trappe (11) est actionnée par un vérin (12) fixé sur la paroi de la cuve (1).

9. Dispositif de distribution de glaçons selon l'une quelconque des revendications précédentes, **caractérisé en ce que** la distribution de glaçons au consommateur s'effectue à travers un tube de distribution (14) sécurisé avec des croisillons pour éviter la pénétration, à l'intérieur, d'un élément extérieur.

10. Dispositif de distribution de glaçons selon la revendication 9, **caractérisé en ce que** lesdits croisillons sont arrangés pour séparer les glaçons lors de leur descente dans le tube (14), avant leur mise en sachet.

11. Dispositif de distribution de glaçons selon la revendication 9 ou la revendication 10, **caractérisé en ce que** le tube de distribution (14) est muni de deux crochets pour accrocher un sachet lors de la récupération des glaçons.

12. Dispositif de distribution de glaçons selon les revendications selon l'une quelconque des revendications précédentes, **caractérisé en ce qu'**il comporte un mécanisme de distribution de sachets dont la distribution est pilotée par une trappe transparente (15), afin d'éviter des manipulations et prises de sachets intempestives, lors du cycle de brassage ou distribution des glaçons.

13. Dispositif de distribution de glaçons selon l'une quelconque des revendications précédentes, **caractérisé en ce qu'**il comporte un extracteur d'air permettant d'évacuer la chaleur contenue à l'intérieur du distributeur vers l'extérieur du distributeur, et ainsi conserver les glaçons à basse température dans la cuve (1).

14. Dispositif de distribution de glaçons selon l'une quelconque des revendications précédentes, **caractérisé en ce qu'**il est équipé d'une enveloppe extérieure assurant le réfléchissement du rayonnement extérieur sur le distributeur, de sorte à minimiser les échanges thermiques entre l'extérieur et l'intérieur du distributeur, pour conserver des glaçons à basse température dans la cuve (1) inférieure à 0°C.

15. Dispositif de distribution de glaçons selon l'une quelconque des revendications précédentes, **caractérisé en ce que** l'accès intérieur au distributeur est réalisé avec une porte, dont son ouverture et sa fermeture sont facilitées par un système d'accostage muni d'une cale pentue (18) en téflon^{™}, et d'une poignée de fermeture rotative (19) pour bénéficier d'une fermeture progressive facilitée tout en tournant la poignée de fermeture rotative (19).

## Patentansprüche

1. Eiswürfelspender des Typs, umfassend einen Behälter (1) zur Aufnahme von auszugebenden losen Eiswürfeln, ein Entnahmerad (5), das drehbar um eine Rührwelle (3) montiert ist, die sich durch den Behälter (1) erstreckt, wobei die Rührwelle an ihren Enden im Behälter (1) mit zwei Wälzlagern zentriert ist und von einem an der Wand des Behälters (1) befestigten Getriebemotor (7) angetrieben wird, und eine im oberen Teil der Wand des Behälters (1) angeordnete Auslassöffnung (20), wobei das Rad (5) zwei Dosierbecher (2) umfasst, deren Form so gewählt ist, dass sie einem kalibrierten Volumen an auszugebenden Eiswürfeln entspricht, wobei der Spender ferner ein Steuerelement (7) umfasst, das dazu geeignet ist, das Rad (5) unter der Steuerung eines Verbrauchers im Uhrzeigersinn bis in eine hohe Position zu drehen, in der sich die offene Seite des Bechers (2) zur Ausgabe einer Dosis Eiswürfel gegenüber der Auslassöffnung (20) befindet, um eine kalibrierte Menge an Eiswürfeln aus dem Behälter zu entnehmen, **dadurch gekennzeichnet, dass** die horizontale mechanische Position "0" der beiden Becher (2) durch einen Positionssensor (10) erkannt wird, der an der Drehachse (7) des Getriebemotors befestigt ist, und **dadurch, dass** das Öffnen und Schließen der Auslassöffnung (20) durch eine Klappe (11) gesteuert wird, die ihrerseits durch den Mischzyklus (gegen den Uhrzeigersinn), die Ausgabe (im Uhrzeigersinn) und die jeweilige Position der beiden Becher (2) mit dem Positionssensor (10) angesteuert wird.

2. Eiswürfelspender nach Anspruch 1, **dadurch gekennzeichnet, dass** der Behälter (1) eine optimale räumliche geometrische Form aufweist, um eine Durchmischung aller enthaltenen Eiswürfel zu ermöglichen, wobei die mit Schaufeln (4) ausgestattete Rührwelle (3) ein Aneinanderkleben der Eiswürfel verhindert.

3. Eiswürfelspender nach Anspruch 1 oder 2,
**dadurch gekennzeichnet, dass** die Rührwelle (3) über fünf im 90°-Winkel zueinander angeordnete Schaufeln (4) mit zunehmender Länge verfügt, die einen rotierenden Kegelstumpf bilden, der sich der Innenform des Behälters (1) anpasst und somit alle Eiswürfel durchmischt.

4. Eiswürfelspender nach einem der vorstehenden Ansprüche,
**dadurch gekennzeichnet, dass** die vordere Form jedes der beiden Becher (2) so optimiert ist, dass er im Uhrzeigersinn eine kalibrierte Dosis Eiswürfel aufnehmen kann, und die hintere Form so profiliert ist, dass er die Eiswürfel ohne mechanischen Aufwand effizient gegen den Uhrzeigersinn durchmischen kann.

5. Eiswürfelspender nach einem der vorstehenden Ansprüche,
**dadurch gekennzeichnet, dass** der Behälter (1) von einer Eiswürfelherstellungsmaschine (6) thermisch isoliert ist, um eine Eiswürfeltemperatur im Behälter unter 0 °C zu halten.

6. Eiswürfelspender nach einem der vorstehenden Ansprüche,
**dadurch gekennzeichnet, dass** die Unterbrechung der Eiswürfelproduktion über einen Sensor "Behälter voll" (9) erfolgt, der so platziert ist, dass er die Höhe der im Behälter (1) vorhandenen Eiswürfel erkennt und beim Durchmischen der Eiswürfel nicht beschädigt wird.

7. Eiswürfelspender nach einem der vorstehenden Ansprüche,
**dadurch gekennzeichnet, dass** die Kenntnis der Positionierung der Becher (2) die Ansteuerung und die Kontrolle der Ausgabe der Eiswürfel mit einer Drehung im Uhrzeigersinn um 90° ermöglicht.

8. Eiswürfelspender nach einem der vorstehenden Ansprüche,
**dadurch gekennzeichnet, dass** die Klappe (11) durch ein an der Wand des Behälters (1) befestigtes Stellglied (12) betätigt wird.

9. Eiswürfelspender nach einem der vorstehenden Ansprüche,
**dadurch gekennzeichnet, dass** die Ausgabe der Eiswürfel an den Verbraucher über ein Ausgaberohr (14) erfolgt, das mit Querstreben gesichert ist, um das Eindringen von Fremdkörpern in das Innere zu verhindern.

10. Eiswürfelspender nach Anspruch 9, **dadurch gekennzeichnet, dass** die Querstreben so angeordnet sind, dass sie die Eiswürfel bei deren Abwärtsbewegung im Rohr (14) trennen, bevor sie in Beutel gefüllt werden.

11. Eiswürfelspender nach Anspruch 9 oder 10,
**dadurch gekennzeichnet, dass** das Ausgaberohr (14) mit zwei Haken zum Aufhängen eines Beutels beim Auffangen der Eiswürfel ausgestattet ist.

12. Eiswürfelspender nach den Ansprüchen nach einem der vorstehenden Ansprüche, **dadurch gekennzeichnet, dass** er einen Beutelausgabemechanismus beinhaltet, dessen Ausgabe durch eine transparente Klappe (15) gesteuert wird, um Manipulationen und unbeabsichtigte Entnahme der Beutel während des Durchmischungs- oder Eiswürfelausgabezyklus zu vermeiden.

13. Eiswürfelspender nach einem der vorstehenden Ansprüche,
**dadurch gekennzeichnet, dass** er über eine Luftabsaugung verfügt, die die im Inneren des Spenders enthaltene Wärme nach außerhalb des Spenders ableitet und somit die Eiswürfel im Behälter (1) auf einer niedrigen Temperatur hält.

14. Eiswürfelspender nach einem der vorstehenden Ansprüche,
**dadurch gekennzeichnet, dass** er mit einem Außengehäuse ausgestattet ist, das die Reflexion der externen Strahlung auf den Spender gewährleistet, um den Wärmeaustausch zwischen der Außen- und Innenseite des Spenders zu minimieren, um die Eiswürfel im Behälter (1) auf einer niedrigen Temperatur unter 0 °C zu halten.

15. Eiswürfelspender nach einem der vorstehenden Ansprüche,
**dadurch gekennzeichnet, dass** der interne Zugang zum Spender über eine Tür erfolgt, deren Öffnen und Schließen durch ein Andocksystem erleichtert wird, das mit einem schrägen Keil (18) aus Teflon^{™} und einem drehbaren Schließgriff (19) ausgestattet ist, um durch Drehen des drehbaren Schließgriffs (19) ein erleichtertes schrittweises Schließen zu ermöglichen.

## Claims

1. Ice cube dispensing device, comprising a tank (1) for containing loose ice cubes to be dispensed, a pick-up wheel (5), rotatably mounted about an agitator shaft (3) extending through the tank (1), said agitator shaft being centered at its ends in the tank (1) with two rolling bearings and driven by a geared motor (7) fixed to the wall of the tank (1), and an outlet opening (20) provided in the upper part of the wall of the tank (1), the wheel (5) comprising two measuring buckets (2) the shape of which is chosen in correspondence with a calibrated volume of ice cubes to be dispensed, the dispensing device further comprising a control member (7) suitable for rotating the wheel (5) clockwise under the control of a consumer, in order to take a calibrated quantity of ice cubes from the tank to an upper position in which the open side of the bucket (2) is arranged opposite the outlet opening (20) in order to deliver a portion of ice cubes, **characterized in that** the horizontal mechanical "0" position of the two buckets (2) is indicated by a position sensor (10) fixed to the geared motor rotation shaft (7) **and in that** the opening and closing of the outlet opening (20) is controlled by a flap (11), which is controlled by the stirring cycle (counter-clockwise), the dispensing cycle (clockwise) and the respective position of the two buckets (2) with the position sensor (10).

2. Ice cube dispensing device according to claim 1, **characterized in that** the tank (1) has an optimum spatial geometric shape in order to allow all the ice cubes contained therein to be stirred, with the agitator shaft (3) provided with blades (4) in order to prevent the ice cubes sticking together.

3. Ice cube dispensing device according to either claim 1 or claim 2,
**characterized in that** the agitator shaft (3) has five blades (4) oriented at 90° to one another, of progressive lengths generating a rotating truncated cone, in order to fit the internal shape of the tank (1) and thus stir all the ice cubes.

4. Ice cube dispensing device according to any of the preceding claims,
**characterized in that** the front shape of each of the two buckets (2) is optimized to take a calibrated portion of ice cubes in a clockwise direction, and that the rear shape is profiled to efficiently stir the ice cubes in a counter-clockwise direction without mechanical effort.

5. Ice cube dispensing device according to any of the preceding claims,
**characterized in that** the tank (1) is thermally insulated from an ice cube production machine (6), in order to maintain an ice cube temperature in the tank below 0°C.

6. Ice cube dispensing device according to any of the preceding claims,
**characterized in that** ice cube production process is stopped by a "tank full" sensor (9), positioned to detect the height of ice cubes present in the tank (1) and not to be damaged when the ice cubes are stirred.

7. Ice cube dispensing device according to any of the preceding claims,
**characterized in that** knowledge of the positioning of the buckets (2) allows ice cube dispensing to be monitored and controlled, with clockwise rotation of 90°.

8. Ice cube dispensing device according to any of the preceding claims,
**characterized in that** the flap (11) is actuated by a cylinder (12) fixed to the wall of the tank (1).

9. Ice cube dispensing device according to any of the preceding claims,
**characterized in that** the ice cubes are dispensed to the consumer through a dispensing tube (14) secured with crosspieces to prevent an external element from penetrating the interior.

10. Ice cube dispensing device according to claim 9, **characterized in that** said crosspieces are arranged to separate the ice cubes as they descend into the tube (14), prior to being bagged.

11. Ice cube dispensing device according to either claim 9 or claim 10,
**characterized in that** the dispensing tube (14) is provided with two hooks for hanging a bag when collecting ice cubes.

12. Ice cube dispensing device according to any of the preceding claims,
**characterized in that** it comprises a bag dispensing mechanism, the dispensing of which is controlled by a transparent flap (15), in order to avoid tampering and unauthorized removal of bags during the ice cube stirring or dispensing cycle.

13. Ice cube dispensing device according to any of the preceding claims,
**characterized in that** it comprises an air extractor allowing the heat contained inside the dispenser to be evacuated to the outside of the dispenser, thus keeping the ice cubes at a low temperature in the tank (1).

14. Ice cube dispensing device according to any of the preceding claims,
**characterized in that** it is equipped with an outer casing ensuring the reflection of external radiation on the dispenser, so as to minimize heat exchanges between the outside and the inside of the dispenser, in order to keep ice cubes at a low temperature in the tank (1) below 0°C.

15. Ice cube dispensing device according to any of the preceding claims,
**characterized in that** internal access to the dispenser is achieved with a door, the opening and closing of which is facilitated by a docking system provided with a sloping Teflon^{™} wedge (18), and a rotary closing handle (19) in order to benefit from facilitated progressive closing while turning the rotary closing handle (19).
